# EUROPÄISCHE PATENTSCHRIFT

(11) **EP 2 830 432 B1**
(45) Veröffentlichungstag und Bekanntmachung des Hinweises auf die Patenterteilung: **22.07.2020**
(21) Anmeldenummer: 13702990.6
(22) Anmeldetag: 31.01.2013
(51) Int. Cl.: A23G 1/04, A23G 3/02, A23G 3/20, A21C 11/00, A21C 15/00

(54) **VORRICHTUNG ZUR DOSIERUNG UND FÖRDERUNG ZÄHFLÜSSIGER MASSEN**
DEVICE FOR DOSING AND PROPELLING VISCOUS MASSES
DISPOSITF POUR LE DOSAGE ET L'EXTRACTION DES MASSES VISQUEUSES

(30) Priorität: 29.03.2012 AT 3812012
(43) Veröffentlichungstag der Anmeldung: 04.02.2015
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Stefan, A-2202 Königsbrunn (AT); JIRASCHEK, Christoph, DK-2000 Frederiksberg (DK)
(74) Vertreter: Puchberger & Partner Patentanwälte
(86) Internationale Anmeldenummer: PCT/EP2013/051894
(87) Internationale Veröffentlichungsnummer: WO 2013/143722

(56) Entgegenhaltungen:
- WO-A1-00/30458
- CH-A5- 646 342
- DE-A1- 2 003 696
- US-A- 3 164 490
- US-A- 3 340 824

## Beschreibung

Die Erfindung betrifft eine Vorrichtung zur Förderung und Dosierung von pumpfähigen Massen, wie zähflüssige, dickflüssige, schaumige und/oder teigige Massen wie beispielsweise Cremes, Schokoladecremes, Teige oder ähnliches, insbesondere für Lebensmittel und essbare Produkte sowie eine Vorrichtung zur dosierten Ausgabe einer pumpfähigen Masse auf einen gegebenenfalls bewegten Trägerkörper in einem Ausgabebereich umfassend eine Pumpenanordnung zur Förderung der Masse durch eine Ausgabeöffnung, die in einem Ausgabekörper vorgesehen ist und durch Positionierung gegenüber einem ersten Körper verschließbar ist.

Ähnliche Vorrichtungen sind insbesondere im Lebensmittelbereich seit langer Zeit bekannt und in unterschiedlichen Ausführungsformen publiziert. Herkömmliche Vorrichtungen sind beispielsweise aus der DE 2 003 696 A1, der CH 646 342 A5, der US 3,340,824 A, der US 3,164,490 A, und der WO 00/30458 A1 bekannt.

Aus der CH 646 342 A5 ist ein Apparat zum Zuführen von Materialien auf ein darunter befindliches Förderband bekannt, wobei der Ausgabekörper nur in einem begrenzten Bereich um den ersten inneren Körper rotiert.

Gattungsähnliche Vorrichtungen werden beispielsweise dazu verwendet, zähflüssige Massen wie Schokoladecremes oder ähnliches auf essbare Trägerkörper wie Keks aufzutragen und gegebenenfalls mit einem zweiten Trägerkörper abzudecken. Diese in Fachkreisen unter dem Begriff "Sandwich-Keks" bekannten essbaren Produkte werden seit längerer Zeit in großen Stückzahlen hergestellt. Um diese hohen Stückzahlen effizient herstellen zu können, ist ein rascher und exakter Auftrag der zähflüssigen Masse auf den Trägerkörper notwendig.

Dazu gibt es beispielsweise Vorrichtungen, bei denen eine Pumpe die Masse über eine Zuleitung in einen zylinderförmigen Körper leitet. In diesem befinden sich Kanäle, durch welche die Masse nach außen auf den Trägerkörper geleitet wird. Im Außenbereich des zylinderförmigen Körpers ist ein Hohlzylinder vorgesehen, der den zylinderförmigen Körper im Wesentlichen umschließt und um diesen drehbar angeordnet ist. Der Hohlzylinder weist ferner Öffnungen auf, durch welche die Creme austreten kann. Die Öffnungen sind beispielsweise gleichmäßig am Umfang verteilt, jedoch durch den hohlzylinderförmigen Körper in regelmäßigen Abständen unterbrochen. Wird von der Pumpenanordnung die Masse in den zylinderförmigen Körper geleitet, so kann diese Masse nur dann aus dem Zylinder austreten, wenn ein Zuleitungskanal und eine Öffnung des Hohlzylinders übereinander liegen oder einander zumindest teilweise überschneiden. Die Trägerkörper, z.B. Keks, werden auf Fördervorrichtungen unterhalb der Vorrichtung vorbeigeführt. Die Geschwindigkeit der Keks entspricht dabei im Wesentlichen der Außengeschwindigkeit des gedrehten zylinderförmigen Körpers.

Die Förderleistung und die Geschwindigkeit des Auftrages der Masse sind dabei insbesondere durch die Formbarkeit und die Viskosität der aufzutragenden Masse bestimmt. Um den Durchsatz und die Anzahl der pro Zeiteinheit zu verarbeitenden Keks zu erhöhen, werden in den zylinderförmigen Körpern mehrere Öffnungen nebeneinander vorgesehen. Eine zentrale Zuleitung versorgt dabei die einzelnen Cremeausgabeöffnungen mit der aufzutragenden Masse. Nachteilig an dieser dem Stand der Technik entsprechenden Konstruktion ist, dass es aufgrund des Verteilersystems und der von einer zentralen Zuleitung abzweigenden Cremeleitungen zu Ungleichmäßigkeiten beim Auftrag und der Verteilung der Massen kommt. Diese Ungleichmäßigkeit resultiert in höherem Ausschuss, was in weiterer Folge negativen Einfluss auf die Effizienz des Herstellungsverfahrens hat.

Aufgabe der Erfindung ist es, eine Vorrichtung zur Förderung und Dosierung von zähflüssigen, dickflüssigen, schaumigen und/oder teigigen Massen wie beispielsweise Cremes, Schokoladecremes, Teige oder ähnliches zu schaffen, welche einen möglichst hohen Massendurchsatz exakt und genau dosiert auf die Trägerkörper fördert, welche einfach und kostengünstig aufgebaut ist, einfach in der Wartung, einfach in der Reinigbarkeit, flexibel in der Anwendung und/oder insbesondere flexibel bei der Wahl der Öffnungen zum Auftragen der zähflüssigen Massen ist.

Die erfindungsgemäße Aufgabe wird insbesondere durch die Merkmale des unabhängigen Patentanspruchs 1 gelöst.

Weitere erfindungsgemäße Merkmale sind, dass im Ausgabekörper zumindest eine Ausgabeöffnung vorgesehen ist, und dass zur Ausgabe der Masse auf den Trägerkörper im Ausgabebereich die erste Öffnung und die Ausgabeöffnung übereinanderliegend oder einander überschneidend angeordnet sind, dass der Ausgabekörper eine im Wesentlichen hohlzylinderförmige Grundform aufweist, die den Innenraum zumindest teilweise umgibt, dass der Ausgabekörper rotierend um den ersten Körper und um die Pumpenanordnung angeordnet ist und/oder dass die Rotationsachse im Wesentlichen der Symmetrieachse des Ausgabekörpers und/oder des Innenraums entspricht.

Ferner ist die erfindungsgemäße Vorrichtung dadurch gekennzeichnet, dass im Ausgabekörper entlang eines Umfangskreises mehrere Ausgabeöffnungen vorgesehen sind, dass gegebenenfalls die Tangentialgeschwindigkeit des Ausgabekörpers an dessen Außenseite im Wesentlichen der Bewegungsgeschwindigkeit des Trägerkörpers entspricht, dass der erste Körper im Wesentlichen der Innenseite des Innenraums des hohlzylinderförmigen Ausgabekörpers folgend ausgebildet ist und/oder dass die Ausgabeöffnungen außerhalb des Ausgabebereichs von dem ersten Körper verschlossen sind.

Ferner kann erfindungsgemäß vorgesehen sein, dass mehrere Ausgabebereiche parallel angeordnet sind, dass pro Ausgabebereich eine Gruppe von Ausgabeöffnungen angeordnet sind, wobei die jeweiligen Ausgabeöffnungen einer Gruppe nacheinander durch Bewegung des Ausgabekörpers in den jeweiligen Ausgabebereich bewegbar sind, dass die Ausgabeöffnungen einer Gruppe jeweils entlang eines Umfangskreises des Ausgabekörpers angeordnet sind, dass mehrere Ausgabebereiche vorgesehen sind, dass die Umfangskreise im Wesentlichen parallel zueinander verlaufen und dass die Umfangskreise zumindest teilweise jeweils einen Ausgabebereich durchlaufen und/oder dass pro Ausgabebereich, pro Gruppe von Ausgabeöffnungen und/oder pro Umfangskreis eine Pumpenanordnung vorgesehen ist.

Erfindungsgemäße Merkmale sind auch, dass der Ausgabekörper mehrere Gruppen von Ausgabeöffnungen und einen zylinderförmigen Innenraum aufweist,
dass die Ausgabeöffnungen einer Gruppe entlang eines Umfangskreises des Ausgabekörpers angeordnet sind, dass in dem Innenraum pro Gruppe an Ausgabeöffnungen eine Pumpenanordnung vorgesehen ist, welche die Masse von einer Massenzuleitung zu der ersten Öffnung fördert, dass der Ausgabekörper drehbar um die Pumpenanordnung und um den ersten Körper angeordnet ist,
dass eine Förderung der Masse in den Ausgabebereich erfolgt, wenn die erste Öffnung und die Ausgabeöffnung einander zumindest überschneiden, und/oder dass die Förderung durch dieselbe Ausgabeöffnung (5) gestoppt ist, wenn sie durch den ersten Körper verschlossen ist.

Darüber hinaus ist vorgesehen, dass die Pumpenanordnung angetriebene Fördermittel umfasst. Ferner kann vorgesehen sein, dass die Fördermittel gegebenenfalls über Wellen von einem Pumpenantrieb angetrieben sind, dass zumindest zwei, bevorzugt alle Pumpenanordnungen vom demselben Pumpenantrieb und/oder denselben Wellen angetrieben sind, dass zur Drehung des Ausgabekörpers ein Ausgabeantrieb vorgesehen ist und/oder dass der Antrieb der Pumpenanordnungen und der Antrieb des Ausgabekörpers getrennt oder getrennt steuerbar erfolgt.

Vorteilhaft an der vorliegenden Erfindung ist, dass die Zufuhr der Masse zu jeder einzelnen Ausgabestelle von einer eigenen Pumpenanordnung ausgeführt wird. Dadurch ist der Durchsatz der Masse an jeder Ausgabestelle konstant und weitgehend unabhängig von Strömungsverhältnissen etwaiger Verteilerkanäle. Vorteilhaft ist es, wenn die einzelnen Pumpenanordnungen, welche in bevorzugter Weise parallel geschalten sind, von einem einzigen Antrieb antreibbar und/oder angetrieben sind.

Die ersten Öffnungen sind dabei je nach Anwendung unterschiedlich ausgestaltet. So kann es von Vorteil sein, die durch die ersten Öffnungen gebildeten Kanäle kurz auszubilden, um beispielsweise möglichst geringe Widerstände überwinden zu müssen. Ferner können die durch die Öffnungen gebildeten Kanäle auch eine gewisse Länge und eine gewisse Form aufweisen, um beispielsweise ein gleichmäßiges Strömungsprofil der Masse zu erzielen.

Zum schnellen und exakten Auftrag der Masse auf einen Trägerkörper ist es gemäß der vorliegenden Erfindung vorteilhaft, dass der Auftrag der Masse auch bei bewegtem Trägerkörper erfolgen kann. Insbesondere bei spröden oder zerbrechlichen Trägerkörpern wie dünnwandige Backwaren etc. ist ein schnelles Stoppen und Anfahren des Trägerkörpers nur bedingt möglich. Die erfindungsgemäße Vorrichtung ermöglicht den Auftrag auf bewegte Trägerkörper, gleichförmig bewegte Trägerkörper, ungleichförmig bewegte Trägerkörper, jedoch auch auf stillstehende Trägerkörper. Um den Durchsatz der verarbeitbaren Trägerkörper pro Zeiteinheit zu erhöhen, ist die erfindungsgemäße Vorrichtung weiters dazu geeignet, die Masse auf mehrere Trägerkörper gleichzeitig zu fördern. Durch die Anordnung jeweils einer Pumpenanordnung pro Ausgabebereich ist die Anzahl der nebeneinander, parallel angeordneten Ausgabebereiche flexibel wählbar.

Der Ausgabekörper mit den Ausgabeöffnungen erfüllt bei der vorliegenden Vorrichtung mehrere Funktionen, die vorteilhaft zusammenwirken:
Der Ausgabekörper weist in einer Drehebene eines Ausgabebereichs zumindest eine, bevorzugt mehrere Ausgabeöffnungen auf. Damit die Masse durch eine der Ausgabeöffnungen gefördert werden kann, muss diese zumindest überschneidend oder aber auch deckend mit der ersten Öffnung des ersten Körpers angeordnet sein. Bei Bewegung der Ausgabeöffnung wird somit die Masse durch die Ausgabeöffnung gefördert, solange zumindest eine Überschneidung mit der ersten Öffnung vorhanden ist - und gestoppt, sobald keine Überschneidung mehr mit der ersten Öffnung gegeben ist. Dadurch wird jede Ausgabeöffnung nur dann mit der Masse durchströmt, wenn eine Überschneidung mit der ersten Öffnung gegeben ist. Die Kante oder der Rand der Ausgabeöffnung wirkt als Schneidekante, die den geförderten Massenstrom abschneidet. Dabei wirkt der Rand der ersten Öffnung als Gegenschneide der Schneidbewegung der Ausgabeöffnung.

Eine weitere durch den Ausgabekörper ausgeführte Funktion ist die Bewegung der Masse im Ausgabebereich. Insbesondere bei bewegten Trägerkörpern muss die Masse exakt auf den Trägerkörper platziert werden. Die Bewegungskomponente, die im Wesentlichen parallel zur Bewegungsrichtung des Trägerkörpers verläuft, wird zumindest teilweise, bevorzugt vollständig, von dem Ausgabekörper bewirkt. So entspricht gemäß einer vorteilhaften Ausführung der vorliegenden Erfindung die Umfangsgeschwindigkeit des Ausgabekörpers im Wesentlichen der Transportgeschwindigkeit der Trägerkörper im Ausgabebereich.

In einer bevorzugten Anwendung und Ausführung ist die erfindungsgemäße Vorrichtung zur industriellen Herstellung von Sandwich-Keks geeignet. Dies umfasst, dass die Vorrichtung durch eine Maschinensteuerung steuerbar ist und dass die Vorrichtung "inline" in einer Produktionslinie eingesetzt ist. Ferner ist gemäß dieser Ausführungsform die Vorrichtung zur Förderung und zur Herstellung essbarer Produkte geeignet. Diese Anwendung gilt für alle offenbarten Ausführungsformen der vorliegenden Erfindung.

Anzumerken ist, dass die Bezeichnung Innenraum nicht zwingend bedeutet, dass die Vorrichtung selbst einen hohlen Raum aufweist. Vielmehr weist der Ausgabekörper einen Innenraum auf, in welchem in bevorzugter Weise weitere Komponenten der erfindungsgemäßen Vorrichtung vorgesehen sind. In zusammengesetztem, einsatzbereitem Zustand ist somit der Innenraum zumindest teilweise mit weiteren Komponenten wie beispielsweise der Pumpenanordnung oder der pumpfähigen Masse befüllt,

In weiterer Folge wird nun die erfindungsgemäße Vorrichtung anhand konkreter Ausführungsbeispiele weiter erörtert.

Fig. 1 zeigt eine schematische Schrägansicht der maßgeblichen Teile einer erfindungsgemäßen Vorrichtung.

Fig. 2 zeigt einen schematischen Längsschnitt einer Ausführungsform der erfindungsgemäßen Vorrichtung.

Fig. 3, Fig. 4 und Fig. 5 zeigen eine schematische Schnittdarstellungen entlang einer Radialebene bzw. einer Drehebene einer erfindungsgemäßen Vorrichtung.

Fig. 6 zeigt eine Detailansicht von Teilen der Pumpenanordnung.

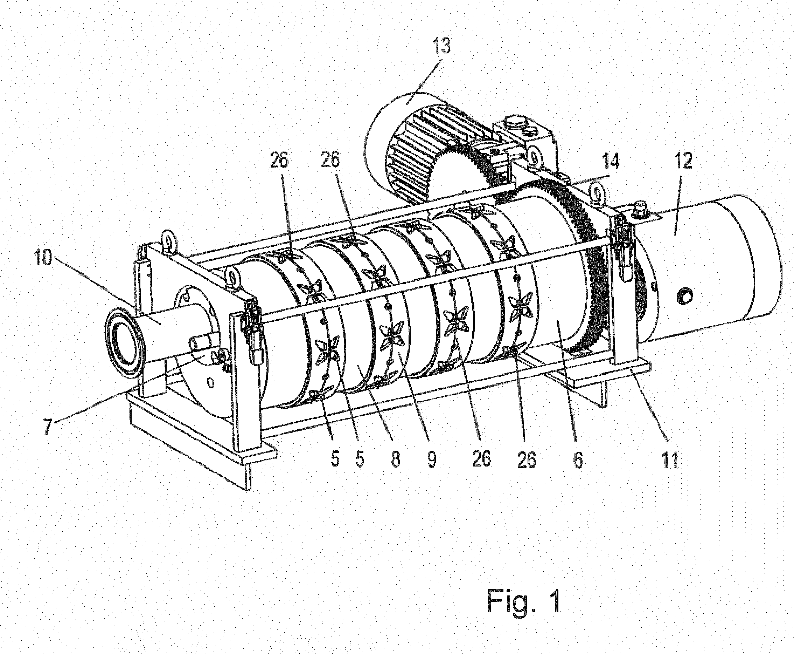

Fig. 1 zeigt eine schematische Schrägansicht maßgeblicher Teile der erfindungsgemäßen Vorrichtung. Dabei ist an einem Grundgestell 11 ein Ausgabekörper 6 drehbar gelagert und über einen Ausgabeantrieb 13 sowie ein Ausgabegetriebe 14 antreibbar und/oder angetrieben. Im Ausgabekörper 6 sind Ausgabeöffnungen 5 vorgesehen. Der Ausgabekörper 6 umfasst ferner einen Grundkörper 8 sowie einen oder mehrere Schablonenkörper 9. Dabei können der Schablonenkörper 9 und der Grundkörper 8 einstückig ausgeführt sein oder auch, wie in der vorliegenden Ausführung als getrennte jedoch miteinander verbundene Körper ausgebildet sein. Ferner ist ein Pumpenantrieb 12 zum Antrieb der Pumpenanordnung und/oder der bewegten Teile der Pumpenanordnung 2 vorgesehen. Die Pumpenanordnung liegt in der vorliegenden Ausführung in einem Innenraum 7 des Ausgabekörpers 6. Die Pumpenanordnung 2 fördert die Masse 1 von einer Massenzuleitung 10 zu den Ausgabeöffnungen 5 und in weiterer Folge auf einen oder mehrere Trägerkörper 15. Die Trägerkörper werden - hier nicht dargestellt - an der erfindungsgemäßen Vorrichtung vorbeigeführt, um die über die Öffnungen 5 abgegebene Masse aufzunehmen.

Die Schablonenkörper 9 umfassen die Ausgabeöffnungen 5. Die Ausgabeöffnungen 5 können unterschiedliche Formen aufweisen. In der vorliegenden Ausführung umfassen die Ausgabeöffnungen 5 mehrere Teilöffnungen. Diese sind sternförmig angeordnet und weisen in ihrem Zentrum kreuzförmige Stege auf. Beim Durchtritt der Masse kann je nach Ausgestaltung der Form der Austrittsöffnungen 5 der Massenstrom aufgeteilt oder im Ausgabebereich wieder zusammengeführt werden. Beispielsweise ist bei flüssigen Massen ein Zusammenlaufen der Flüssigkeit auf den Trägerkörper möglich.

Dazu wird der Ausgabekörper 6, der in der vorliegenden Ausführung als zylinderförmiger Körper ausgebildet ist, gedreht. In definierten Stellungen, insbesondere in definierten Drehstellungen liegen die Ausgabeöffnungen des Ausgabekörpers 6 im Bereich oder über den ersten Öffnungen 3 des ersten Körpers 4. In diesen Stellungen der Vorrichtung kann die gepumpte Masse durch die einander überschneidenden Öffnungen 3, 5 austreten. In bevorzugter Weise verschließt der erste Körper alle Ausgabeöffnungen des Ausgabekörpers mit Ausnahme jener Ausgabeöffnungen, die sich im Ausgabebereich befinden.

Die Pumpenanordnung 2 ist dabei zwischen der Massenzuleitung und dem Ausgabebereich angeordnet, wobei der Weg, den die Masse zwischen der Pumpenanordnung 2 und dem Trägerkörper 15 zurücklegt, gering gehalten ist.

Entlang des Ausgabekörpers sind eine Mehrzahl an Gruppen von Ausgabeöffnungen 5 vorgesehen. Diese sind entlang von parallel zueinander angeordneten Umfangskreisen des Ausgabekörpers angeordnet. In der vorliegenden Ausführung sind vier Gruppen von Ausgabeöffnungen 5 entlang von vier Umfangskreisen 26 angeordnet.

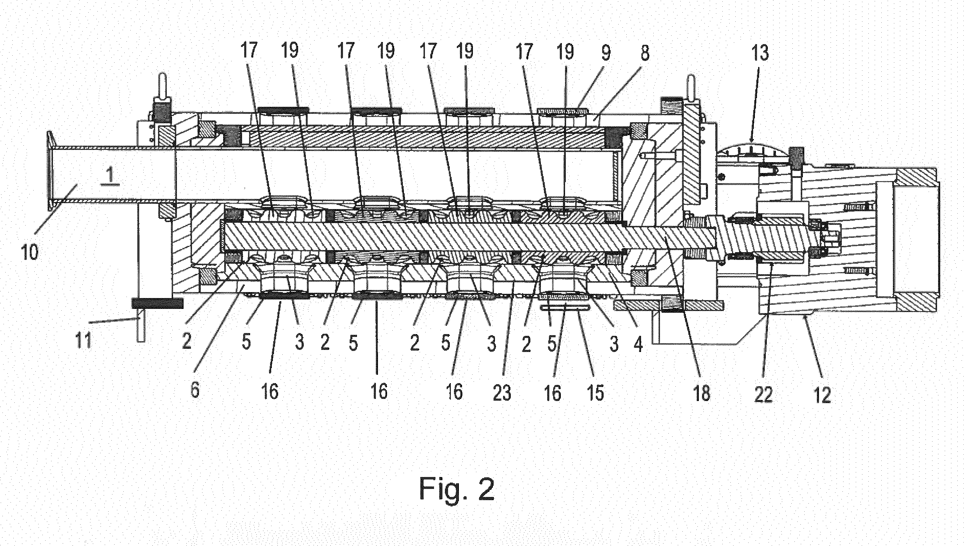

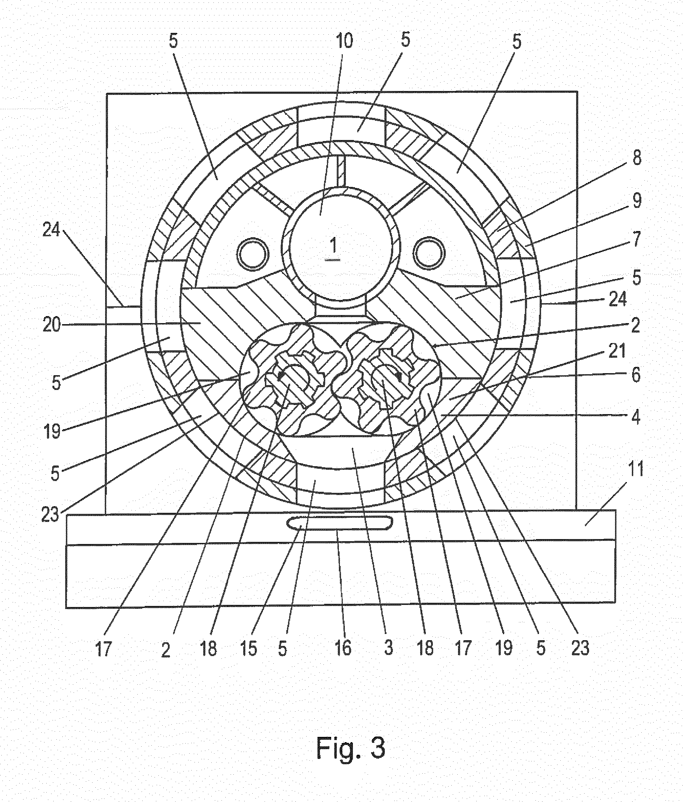

Fig. 2 zeigt einen Längsschnitt einer Ausführungsform der vorliegenden erfindungsgemäßen Vorrichtung. Die Masse 1 wird von der Pumpenanordnung 2 von der Massenzuleitung 10 in den Ausgabebereich 16 und gegebenenfalls auf einen Trägerkörper 15 gefördert. In der vorliegenden Ausführung sind vier Pumpenanordnungen vorgesehen. Diese weisen jeweils einen Verbindungskanal zur Massenzuleitung 10 auf. Durch die Verbindungskanäle wird die Masse von der Pumpenanordnung 2 angesaugt und durch die Ausgabeöffnungen 5 gefördert. Bevorzugt wird in allen Ausführungsbeispielen die Masse 1 von einer nicht dargestellten Zuleitungspumpe in die Massenzuleitung 10 gepumpt. Ferner ist eine zentrale Massenzuleitung 10 vorgesehen, die alle Pumpenanordnungen 2 versorgt. Dabei sind die Pumpenanordnungen strömungstechnisch zwischen der Massenzuleitung 10 und den Ausgabebereichen angeordnet. Pro Pumpenanordnung wird ein Teilmassenstrom durch die jeweilige erste Öffnung 3 bzw. die jeweiligen Ausgabeöffnungen 5 gefördert. Die vier parallelen Ausgabebereiche 16 ermöglichen somit eine Vervierfachung des Durchsatzes. Durch die vorteilhafte Anordnung einer zentralen Massenzuleitung 10 und das Vorsehen jeweils einer Pumpenanordnung 2 pro Ausgabebereich 16 ist der Massenstrom in jedem der Ausgabebereiche 16 im Wesentlichen gleich bzw. durch die jeweilige Pumpenanordnung bestimmt. Durch die kurzen Wege, insbesondere zwischen der Massenzuleitung 10 und der Pumpenanordnung 2 und dem Ausgabebereich 16 bzw. der jeweiligen Ausgabeöffnung 5, sind Strömungswiderstände minimiert. Durch spezielle Formung des Einlaufs, insbesondere durch die Formgebung der ersten Öffnung 3, kann das Strömungsprofil der Masse zwischen der Pumpenanordnung 2 und der Ausgabeöffnung 5 beeinflusst sein. Die Pumpenanordnungen 2 umfassen gemäß den Fig. 3 bis 5 jeweils Fördermittel 17, die in der vorliegenden Ausführungsform als walzenförmige Körper mit ineinandergreifenden Oberflächen ausgebildet sind. Die Fördermittel 17, insbesondere die Walzen, sind von Wellen 18 angetrieben. In der vorliegenden Ausführung sind jeweils vier Fördermittel von einer Welle 18 angetrieben. Eine zweite Welle 18, welche sich in entgegengesetzter Richtung dreht wie die jeweils andere Welle, ist ebenfalls mit vier Fördermitteln 17 versehen. Beide Wellen sind von einem Pumpenantrieb 12 angetrieben. Gegebenenfalls ist ein Pumpengetriebe 22 vorgesehen, um die Drehbewegung eines Antriebs auf mehrere Wellen zu übertragen. Erfindungsgemäß kann jedoch auch vorgesehen sein, dass durch die Wahl anderer Pumpenanordnungen eine einzige Welle ausreicht, um mehrere nebeneinander angeordnete Ausgabebereiche mit Massen 1 zu versorgen.

Der erste Körper 4, die Massenzuleitung 10 und der Pumpenraum 19 sind im Wesentlichen ortsfest angeordnet und/oder zumindest indirekt mit einem Grundgestell 11 verbunden. Der Ausgabekörper 6 ist rotierend um die genannten Teile 4, 10 und 19 angeordnet und von einem Ausgabeantrieb 13 angetrieben. Die Drehachse der Rotation des Ausgabekörpers 6 entspricht im Wesentlichen der Haupterstreckungsachse des zylinderförmigen Ausgabekörpers. Insbesondere fallen die Drehachse des zylinderförmigen Innenraums 7 und die Rotationsachse des Ausgabekörpers 6 zusammen. Somit ist bei Drehung des Ausgabekörpers 6 eine gleitende Berührung entlang einer Berührungsfläche 23 zwischen dem ersten Körper 4 und dem Ausgabekörper 6 gegeben.

Fig. 3 zeigt eine schematische Ansicht eines Schnittes der erfindungsgemäßen Vorrichtung entlang einer Rotationsebene und/oder entlang eines Umfangskreises des zylinderförmigen Ausgabekörpers 6. Dabei ist an dem Grundgestell 11 ein Ausgabekörper 6 mit einer Gruppe von Ausgabeöffnungen 5 bewegbar angeordnet. Der Ausgabekörper 6 umfasst einen Grundkörper 8 sowie einen Schablonenkörper 9. In der vorliegenden Ausführungsform sind der Grundkörper 8 und der Schablonenkörper 9 als konzentrisch angeordnete Hohlzylinder ausgeführt. Die Ausgabeöffnungen erstrecken sich etwa in radialer Richtung von dem Innenraum 7 des Ausgabekörpers 6 nach außen. Dabei kann, wie in der vorliegenden Ausführungsform, eine Veränderung des Querschnittes der Ausgabeöffnung vorgesehen sein. Beispielsweise weist die Öffnung im Schablonenkörper 9 einen anderen Querschnitt auf als im Grundkörper 8. Durch Tausch der Schablonenkörper 9 können in weiterer Folge Austrittsparameter wie die Austrittsgeschwindigkeit, die Austrittsmenge, die Form des austretenden Massenstroms sowie weitere Parameter bestimmt und geändert werden. Im inneren Bereich des Ausgabekörpers 6, insbesondere im Innenraum 7, ist der erste Körper 4 vorgesehen. Dieser umfasst eine oder mehrere erste Öffnungen 3. In der dargestellten Stellung liegen im Ausgabebereich 16 die erste Öffnung 3 und die Ausgabeöffnung 5 angrenzend aneinander, sodass die Masse 1 durch beide Öffnungen hindurchgefördert werden kann. Der erste Körper 4 ist relativ zum Grundgestell 11 im Wesentlichen ortsfest angeordnet. Bei Drehung und/oder Bewegung des Ausgabekörpers 6 bleibt der erste Körper 4 im Wesentlichen in Ruhe. Auch die erste Öffnung 3 bleibt im Wesentlichen unbewegt und/oder nahe dem Ausgabebereich 16. Die Pumpenanordnung 2 fördert die Masse 1 von einer Massenzuleitung 10 Richtung erster Öffnung 3. In der vorliegenden Ausführung ist die Pumpe als Zahnradpumpe oder Zahnwalzenpumpe ausgeführt, deren Wirkungsweise im Wesentlichen der einer Außenzahnradpumpe entspricht. Erfindungsgemäß können jedoch auch andere Pumpen vorgesehene sein, die dazu geeignet sind die Masse auf den Trägerkörper zu fördern. Beispiele sind Drehkolbenpumpen, Kreiskolbenpumpen, Exzenterschneckenpumpen, Impeller, Schneckenförderer, Kolbenpumpen, Radialkolbenpumpen, Schraubenspindelpumpen, Drehschieberpumpen, Profilwalzenpumpen oder ähnliche.

Bei der vorliegenden Ausführung sind zwei ineinandergreifende, an zwei gegengleich rotierenden Wellen 18 angeordnete Fördermittel 17 vorgesehen. Diese sind walzenförmig ausgeführt und weisen eine Außenform auf, die mit der Außenform des weiteren, zweiten Fördermittels 17 in Eingriff bringbar ist. In der dargestellten Ausführung würden sich somit die rechte Welle 18 und die rechten Fördermittel 17 im Uhrzeigersinn drehen und die Masse entlang des Pumpenraums 19 Richtung erster Öffnung 3 fördern. Die linke Welle dreht sich in entgegengesetzte Richtung und fördert die Masse an der linken Seite Richtung erste Öffnung, wo sie sich mit dem Massenstrom der rechten Seite vereint. Bei der Drehung der Fördermittel stehen die beiden walzenförmigen Fördermittel miteinander in Eingriff und dichten somit den Bereich zwischen den Fördermitteln 17 ab.

In weiterer Folge wird die Masse 1 von der ersten Öffnung 3 zur Ausgabeöffnung 5 gefördert, um dann auszutreten und gegebenenfalls auf den Trägerkörper 15 zu gelangen. Dieser Austritt erfolgt jedoch nur dann, wenn die erste Öffnung 3 und die Ausgabeöffnung 5 benachbart angeordnet sind und/oder einander überschneiden. In einer Stellung, in der die erste Öffnung 3 von dem Ausgabekörper 6 verschlossen ist, ist die Förderung und/oder der Austritt der Masse 1 durch diese Öffnung unterbrochen. Durch gezielte Bewegung und/oder Drehung des Ausgabekörpers und Anordnung der Ausgabeöffnungen im Ausgabekörper kann eine periodische Förderung und/oder Ausgabe der Masse 1 in den Ausgabebereich 16 und gegebenenfalls auf den Trägerkörper 15 erfolgen. Durch die Wahl der Größe der ersten Öffnung 3 und der Ausgabeöffnung 5 und durch Wahl der Bewegungsgeschwindigkeit, insbesondere der Drehgeschwindigkeit des Ausgabekörpers 6, in dem die Ausgabeöffnungen 5 angeordnet sind, können die Ausgabezeit sowie die Ausgabegeschwindigkeit und weitere Parameter variiert sein.

Gemäß der vorliegenden Ausführungsform wird die Masse 1 von der Pumpenanordnung 2 durch den ersten Körper gefördert. Dabei ist der erste Körper zumindest teilweise der Innenfläche des Ausgabekörpers 6 folgend ausgebildet, und berührt diese entlang der Berührungsfläche 23. Technischer Hintergrund ist, dass der Spalt zwischen dem ersten Körper 4 und dem Ausgabekörper 6 abgedichtet ist, sodass keine Masse hindurch treten kann. Lediglich im Bereich der Öffnungen kann die Masse von der Pumpenanordnung 2 in den Ausgabebereich 16 gefördert werden. Befindet sich jedoch der Ausgabekörper in einer Drehstellung, in der keine der Ausgabeöffnungen 5 im Bereich der ersten Öffnung 3 liegt, so ist die Ausgabeöffnung 5 verschlossen und es wird keine weitere Masse durch diese Öffnung gefördert. Gemäß der vorliegenden Ausführungsform ist eine Gruppe von Ausgabeöffnungen 5 entlang eines Umfangskreises des zylinderförmigen Ausgabekörpers 6 angeordnet. Dabei ist die Dimension, insbesondere die Breite der Öffnungen in diesem Umfangskreis derart gewählt, dass in jeder Drehstellung zumindest eine der Ausgabeöffnungen 5 mit der ersten Öffnung 3 überschneidend angeordnet ist. Dies hat zur Folge, dass durch die Pumpenanordnung 2 ständig Masse 1 gefördert werden kann ohne dass es zu einer kompletten Unterbrechung des Massenstroms kommt. Es entspricht jedoch durchaus dem Erfindungsgedanken durch größere Abstände der Ausgabeöffnungen 5, oder durch andere Formen der Ausgabeöffnungen 5, zwischenzeitlich die Förderung der Masse 1 komplett zu stoppen. In der vorliegenden Ausführungsform ist ferner der Pumpenraum 19 von dem ersten Körper 4 umgeben. Dieser ist mehrteilig ausgeführt und weist einen Oberteil 20 und einen Unterteil 21 auf. Die Teilungslinie 24 des ersten Körpers 4, in der sich der Oberteil 20 und der Unterteil 21 berühren, verläuft im Wesentlichen durch den breitesten Bereich des Pumpenraums 19. Zur Wartung und zum Zusammenbau kann somit nach Trennung des Ausgabekörpers 6 vom ersten Körper 4 der Oberteil 20 abgenommen werden, um an die Bestandteile der Pumpenanordnung 2 zu gelangen. Erfindungsgemäß können mehrere Ausgabeöffnungen 5 entlang mehrerer, parallel verlaufender Umfangskreise angeordnet sein.

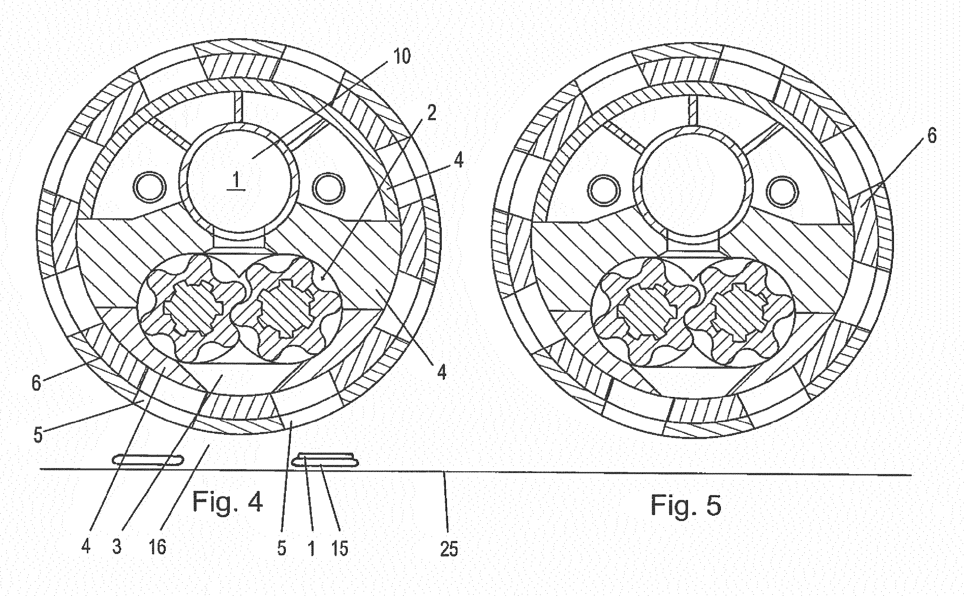

Fig. 4 zeigt einen Schnitt wie Fig. 3 jedoch in einer weiteren Drehstellung. Die Vorrichtung umfasst eine Massenzuleitung 10 zur Zuleitung der Masse 1 zu einer Pumpenanordnung 2. Bewegbar angeordnet ist der Ausgabekörper 6 mit zumindest einer, bevorzugt mehreren Ausgabeöffnungen 5. In der Drehstellung der Fig. 4 ist die erste Öffnung 3 des ersten Körpers 4 von dem Ausgabekörper 6 verschlossen. In dieser Stellung wird keine Masse 1 von der Zuleitung 10 auf den Trägerkörper 15 im Ausgabebereich 16 gefördert. Erfindungsgemäß kann vorgesehen sein, dass die Förderung der Masse unterbrochen ist.

Ferner sind in der vorliegenden Darstellung schematisch zwei Trägerkörper 15 dargestellt. Diese werden entlang einer Förderfläche 25 an der erfindungsgemäßen Vorrichtung vorbeigeführt und durchlaufen dabei den Ausgabebereich 16. Die Bewegungsrichtung der Trägerkörper 15 ist in der dargestellten Ausführungsform von links nach rechts. Somit verläuft die Drehrichtung des Ausgabekörpers 6 gegen den Uhrzeigersinn. Der rechts dargestellte Trägerkörper 15 befindet sich in einer Position nach dem Ausgabebereich 16. Auf dem Trägerkörper 15 befindet sich ein Teil der Masse 1, die im Ausgabebereich von der erfindungsgemäßen Vorrichtung auf den Trägerkörper gefördert wurde. Der links angeordnete Trägerkörper 15 befindet sich in Bewegungsrichtung vor dem Ausgabebereich 16. Auf diesem Trägerkörper befindet sich noch keine Masse 1.

Fig. 5 zeigt eine weitere Drehstellung der erfindungsgemäßen Vorrichtung. Dabei sind die erste Öffnung 3 und die Ausgabeöffnung 5 derart zueinander positioniert, sodass sie überschneidend angeordnet sind. Sobald die Öffnungen einander überschneiden, ist eine Förderung der Masse 1 von der Pumpenanordnung 2 in Richtung Ausgabebereich 16 möglich. Erfindungsgemäß kann vorgesehen sein, dass in jeder Drehstellung des Ausgabekörpers 6 zumindest eine Ausgabeöffnung 5 überschneidend mit der ersten Öffnung 3 angeordnet ist. Somit wird ständig Masse 1 in Richtung Ausgabebereich gefördert, wobei nur durch jeweils jene Ausgabeöffnungen gefördert wird, die sich im Ausgabebereich 16 und/oder im Bereich der ersten Öffnung 3 befinden. Die anderen Ausgabeöffnungen 5 sind vom ersten Körper 4 verschlossen. Bei der Anordnung mehrerer, parallel zueinander vorgesehener Ausgabebereiche sind demnach all jene Ausgabeöffnungen 5 mit der Masse 1 durchströmt, die sich im Ausgabebereich befinden. Durch die Drehung des Ausgabekörpers 6 ist die periodische Öffnung und Schließung der einzelnen Ausgabeöffnungen gegeben. Ein weiterer Vorteil, der durch die drehbare Anordnung des Ausgabekörpers 6 gegeben ist, ist, dass die Masse im Ausgabebereich mit einer Geschwindigkeit beaufschlagt wird, die im Wesentlichen der Tangentialgeschwindigkeit des Ausgabekörpers 6 entspricht. So wird bei stetiger Drehung des Ausgabekörpers die Masse 1 einerseits mit der Strömungsgeschwindigkeit durch die Förderung und andererseits mit der Drehgeschwindigkeit des Ausgabekörpers beaufschlagt. Insbesondere beim Auftrag der Masse auf bewegte Trägerkörper 15 kann somit die Geschwindigkeit der Trägerkörper 15 mit der Geschwindigkeit des Ausgabekörpers 6 und in weiterer Folge mit der Steuerung des Ausgabeantriebs 13 synchronisiert und/oder abgestimmt sein.

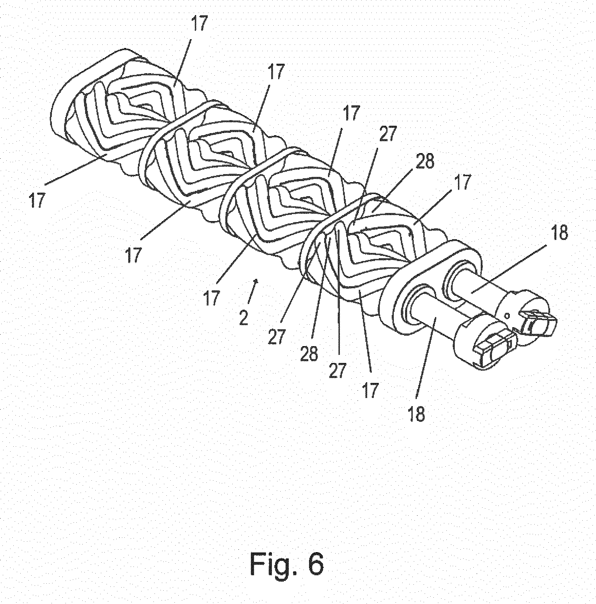

Fig. 6 zeigt eine schematische Ansicht von Teilen der Pumpenanordnung 2, die dazu geeignet ist, in der erfindungsgemäßen Vorrichtung eingesetzt zu werden. Die Pumpenanordnung 2 umfasst Fördermittel 17, die durch angetriebene Wellen 18 drehbar und/oder angetrieben sind. Die Fördermittel 17 sind jeweils paarweise angeordnet. Die beiden paarweise angeordneten Fördermittel 17 drehen sich in entgegengesetzter Richtung um jeweils eine Achse, wobei die beiden Achsen zueinander parallel verlaufen. Bei der Drehbewegung stehen die paarweise angeordneten Fördermittel 17 miteinander in Eingriff. Dazu weist jedes Fördermittel Kämme 27 sowie Freistellungen 28 auf. Die Kämme 27 und die Freistellungen 28 sind derart ausgeführt, dass der Kamm 27 des einen Fördermittels 17 in die Freistellung 28 des weiteren Fördermittels 17 eingreift. In bevorzugter Weise rollen die paarweise angeordneten Fördermittel 17, ähnlich zweier Zahnräder, aneinander ab. Durch das dichtende Eingreifen der paarweise angeordneten Fördermittel 17 ist der Berührungsbereich der beiden Fördermittel 17 im Wesentlichen abgedichtet. Die Förderung der zu fördernden Masse geschieht an der Außenseite des nicht dargestellten Pumpenraums. Dazu tritt, wie beschrieben, eine Masse in den Pumpenraum ein. Diese gelangt in die Freistellungen 28 und wird weiter durch die Drehbewegung der Fördermittel Richtung Ausgabebereich gefördert. In der vorliegenden Ausführungsform sind die Kämme 27 sowie die Freistellungen 28 V-profilförmig ausgeführt. Es sind jedoch auch andere Profilformen wie beispielsweise Schrägverzahnungen, Geradverzahnungen, wellenförmige Verzahnungen etc. dem Erfindungsgedanken entsprechend. Wichtig für die Funktionsweise der Pumpenanordnung 2 ist es, dass die beiden Profile der paarweise angeordneten Fördermittel 17 derart in einander eingreifen, dass sie den Berührungsbereich abdichten und dass eine Förderung an der Außenseite des Pumpenraums ermöglicht ist.

In bevorzugter Weise weisen die Kämme 27 und die Freistellung 28 einen abgerundeten Verlauf auf. Dadurch sind die Scherkräfte in der zu fördernden Masse gering gehalten.

In einer weiteren, nicht dargestellten Ausführung ist für jeweils zwei Ausgabeöffnungen 5 und/oder zwei Ausgabebereiche 16 jeweils eine Pumpenanordnung vorgesehen. Bei ausreichender Förderleistung kann der aus der Pumpenanordnung 2 austretende Massenstrom durch mehrere Ausgabeöffnungen ausgegeben werden. Dabei sollten die Kanäle zwischen der Pumpenanordnung und dem Ausgabebereich derart ausgeführt sein, dass eine gleichmäßige Verteilung der Masse gegeben ist, um den, dem Stand der Technik entsprechenden, Nachteil der ungleichmäßigen Verteilung der Masse zu überwinden. Dies ist insbesondere durch das Vorsehen von Kanälen ähnlicher Längen und Ausgestaltungen gegeben. Der übrige Aufbau dieser Ausführungsform entspricht dem Aufbau der Figuren 1 bis 6.

Die Funktionsweise der vorliegenden Erfindung ist beispielsweise folgende:
Trägerkörper 15 werden entlang einer Förderfläche 25 in einem gewissen Abstand zueinander der erfindungsgemäßen Vorrichtung zugeführt. Die Förderfläche verläuft dabei in einem gewissen Abstand zur Außenseite der Vorrichtung. Die Drehachse des Ausgabekörpers ist im Wesentlichen parallel zur Förderfläche 25 und orthogonal zur Förderrichtung der Trägerkörper 15. Der Ausgabekörper 6 rotiert dabei um den ersten Körper 4, wobei die Rotationsgeschwindigkeit an der Außenseite im Wesentlichen der Bewegungsgeschwindigkeit der Trägerkörper 15 entspricht. Pro Pumpenanordnung ist beispielsweise ein Ausgabebereich 16 vorgesehen. Bewegt sich ein Trägerkörper 15 durch diesen Ausgabebereich, so wird durch Synchronisation und Taktung des Ausgabeantriebs 13 die Ausgabeöffnung über den Trägerkörper bewegt. Befinden sich der Trägerkörper 15 und die Ausgabeöffnung 5 im Bereich oder unterhalb der ersten Öffnung 3, so wird die Masse 1 durch die Pumpenanordnung 2 auf den Trägerkörper 15 gefördert. Bei weiterer Fortbewegung des Trägerkörpers 15 und weiterer Drehung des Ausgabekörpers 5 wird der Massenstrom durch den Rand der Ausgabeöffnung abgeschnitten oder abgeschert und die Ausgabeöffnung 5 wird vom ersten Körper 4 verschlossen. Dabei wirkt der Rand der ersten Öffnung als Gegenschneide der Schneidbewegung der Ausgabeöffnung. Die Förderung der Masse durch die betreffende Ausgabeöffnung 5 wird gestoppt und der mit Masse 1 in Kontakt gebrachte Trägerkörper 15 wird entlang der Förderfläche 25 weiterbewegt. In der Zwischenzeit wird ein nachfolgender Trägerkörper dem Ausgabebereich zugeführt. Befinden sich der nachfolgende Trägerkörper und die nachfolgende Ausgabeöffnung im Bereich der ersten Öffnung, so wird auch auf den nachfolgenden Trägerkörper Masse gefördert. In dieser Weise werden eine Vielzahl von in Bewegungsrichtung aneinandergereihter Trägerkörper mit der Masse versehen. Dabei entspricht der Abstand der Trägerkörper im Wesentlichen dem Abstand der Ausgabeöffnungen am Ausgabekörper.

Um den Durchsatz der zu bearbeitenden Trägerkörper zu steigern, sind entlang der Förderrichtung der Trägerkörper 15 nebeneinander mehrere Ausgabebereiche 16 angeordnet. Auch durch diese weiteren, parallelen Ausgabebereiche werden Trägerkörper hindurchgeführt und dabei mit einer Masse 1 bestrichen. Pro Ausgabebereich ist in bevorzugter Weise eine eigene Pumpenanordnung 2 sowie eine eigene Gruppe an Ausgabeöffnungen 5 vorgesehen.

Durch die erfindungsgemäße Ausgestaltung der Pumpenanordnung sowie der gesamten Vorrichtung können pro Ausgabebereich etwa 600 bis 800 Trägerkörper pro Minute mit einer Masse bestrichen oder versehen werden. Grundsätzlich ist die Erfindung in der Anzahl der parallel angeordneten Ausgabebereiche nicht begrenzt. Dennoch lassen sich bevorzugt etwa 4 bis 10 Ausgabebereiche pro Vorrichtung vorsehen. Dabei sind die Fördermittel 17 der Pumpenanordnung 2 von jeweils durchgehenden Wellen angetrieben. Auch der Ausgabekörper 6 und/oder der erste Körper 4 erstrecken sich über alle parallel angeordneten Ausgabebereiche. Ferner ist in bevorzugter Weise für die gesamte Vorrichtung eine zentrale Massenzuleitung 10 vorgesehen.

### Bezugszeichenliste:

1. Masse
2. Pumpenanordnung
3. Erste Öffnung
4. Erster Körper
5. Ausgabeöffnung
6. Ausgabekörper
7. Innenraum
8. Grundkörper
9. Schablonenkörper
10.Massenzuleitung
11.Grundgestell
12.Pumpenantrieb
13.Ausgabe Antrieb
14.Zweites Getriebe
15.Trägerkörper
16.Ausgabebereich
17.Fördermittel
18.Welle
19.Pumpenraum
20.Oberteil erster Körper
21. Unterteil erster Körper
22. Pumpengetriebe
23. Berührungsfläche
24. Teilungslinie
25. Förderfläche
26. Umfangskreis
27. Kamm
28.Freistellung

## Patentansprüche

1. Vorrichtung zur dosierten Ausgabe einer pumpfähigen Masse (1) auf einen bewegten Trägerkörper (15) in einem Ausgabebereich (16) umfassend:
eine Pumpenanordnung (2) zur Förderung der Masse (1) durch eine Ausgabeöffnung (5), die in einem Ausgabekörper (6) vorgesehen ist und durch Positionierung gegenüber einem ersten Körper (4) verschließbar ist,
wobei der Ausgabekörper (6) einen Innenraum (7) umfasst und wobei in dem Innenraum (7) die Pumpenanordnung (2) vorgesehen ist,
**dadurch gekennzeichnet,**
- **dass** die Pumpenanordnung (2) zwei angetriebene walzenförmige Fördermittel (17) umfasst,
- **dass** die zwei Fördermittel (17) ineinandergreifen und an zwei gegengleich rotierenden Wellen (18) angeordnet sind,
- **dass** die Fördermittel Kämme (27) und Freistellungen (28) aufweisen,
- **und dass** die Kämme (27) und die Freistellungen (28) V-profilförmig ausgebildet sind, oder dass die Kämme (27) und die Freistellungen (28) eine Schrägverzahnung, eine Geradverzahnung oder eine wellenförmige Verzahnung aufweisen.

2. Vorrichtung nach Anspruch 1, **dadurch gekennzeichnet, dass** im Ausgabekörper (6) zumindest eine Ausgabeöffnung (5) vorgesehen ist, und dass zur Ausgabe der Masse auf den Trägerkörper (15) im Ausgabebereich (16) die erste Öffnung (3) und die Ausgabeöffnung (5) übereinanderliegend oder einander überschneidend angeordnet sind.

3. Vorrichtung nach Anspruch 1 oder 2, **dadurch gekennzeichnet, dass** der Ausgabekörper (6) eine im Wesentlichen hohlzylinderförmige Grundform aufweist, die den Innenraum (7) zumindest teilweise umgibt.

4. Vorrichtung nach einem der Ansprüche 1 bis 3, **dadurch gekennzeichnet, dass** die Rotationsachse im Wesentlichen der Symmetrieachse des Ausgabekörpers (6) und/oder des Innenraums (7) entspricht.

5. Vorrichtung nach einem der Ansprüche 1 bis 4, **dadurch gekennzeichnet, dass** im Ausgabekörper (6) entlang eines Umfangskreises mehrere Ausgabeöffnungen (5) vorgesehen sind.

6. Vorrichtung nach einem der Ansprüche 1 bis 5, **dadurch gekennzeichnet, dass** der erste Körper (4) im Wesentlichen der Innenseite des Innenraums (7) des hohlzylinderförmigen Ausgabekörpers (6) folgend ausgebildet ist.

7. Vorrichtung nach einem der Ansprüche 1 bis 6, **dadurch gekennzeichnet, dass** die Ausgabeöffnungen (5) außerhalb des Ausgabebereichs (16) von dem ersten Körper (4) verschlossen sind.

8. Vorrichtung nach einem der Ansprüche 1 bis 7, **dadurch gekennzeichnet, dass** pro Ausgabebereich (16) eine Gruppe von Ausgabeöffnungen (5) angeordnet sind, wobei die jeweiligen Ausgabeöffnungen (5) einer Gruppe nacheinander durch Bewegung des Ausgabekörpers (6) in den Ausgabebereich (16) bewegbar sind.

9. Vorrichtung nach Anspruch 8, **dadurch gekennzeichnet, dass** die Ausgabeöffnungen (5) einer Gruppe jeweils entlang eines Umfangskreises des Ausgabekörpers (6) angeordnet sind.

10. Vorrichtung nach Anspruch 9, **dadurch gekennzeichnet, dass** mehrere Ausgabebereiche (16) vorgesehen sind, dass die Umfangskreise im Wesentlichen parallel zueinander verlaufen und dass die Umfangskreise zumindest teilweise jeweils einen Ausgabebereiche (16) durchlaufen.

11. Vorrichtung nach einem der Ansprüche 1 bis 10, **dadurch gekennzeichnet, dass** pro Ausgabebereich (16), pro Gruppe von Ausgabeöffnungen (5) und/oder pro Umfangskreis eine Pumpenanordnung (2) vorgesehen ist.

12. Vorrichtung nach einem der Ansprüche 1 bis 11, **dadurch gekennzeichnet, dass** der Ausgabekörper (6) mehrere Gruppen von Ausgabeöffnungen (5) und einen zylinderförmigen Innenraum (7) aufweist,
dass die Ausgabeöffnungen (5) einer Gruppe entlang eines Umfangskreises (26) des Ausgabekörpers (6) angeordnet sind,
dass in dem Innenraum (7) pro Gruppe an Ausgabeöffnungen (5) eine Pumpenanordnung (2) vorgesehen ist, welche die Masse (1) von einer Massenzuleitung (10) zu der ersten Öffnung (3) fördert,
dass der Ausgabekörper (6) drehbar um die Pumpenanordnung (2) und um den ersten Körper (4) angeordnet ist,
dass eine Förderung der Masse (1) in den Ausgabebereich (16) erfolgt, wenn die erste Öffnung (3) und die Ausgabeöffnung (5) einander zumindest überschneiden,
und/oder dass die Förderung durch dieselbe Ausgabeöffnung (5) gestoppt ist, wenn sie durch den ersten Körper verschlossen ist.

13. Vorrichtung nach einem der Ansprüche 1 bis 12, **dadurch gekennzeichnet, dass** die Fördermittel (17) über Wellen (18) von einem Pumpenantrieb (12) angetrieben sind.

14. Vorrichtung nach Anspruch 13, **dadurch gekennzeichnet, dass** zumindest zwei, bevorzugt alle Pumpenanordnungen (2) vom demselben Pumpenantrieb (12) und/oder denselben Wellen (18) angetrieben sind.

15. Vorrichtung nach einem der Ansprüche 1 bis 14, **dadurch gekennzeichnet, dass** zur Drehung des Ausgabekörpers ein Ausgabeantrieb vorgesehen ist.

16. Vorrichtung nach Anspruch 15, **dadurch gekennzeichnet, dass** der Antrieb der Pumpenanordnungen und der Antrieb des Ausgabekörpers getrennt oder getrennt steuerbar erfolgt.

17. Vorrichtung nach einem der Ansprüche 1 bis 16, **dadurch gekennzeichnet, dass** für jeweils zwei Ausgabeöffnungen (5) und/oder zwei Ausgabebereiche (16) jeweils eine Pumpenanordnung vorgesehen ist.

## Claims

1. A device for the metered discharge of a pumpable mass (1) onto a moving carrier body (15) in a discharge region (16), comprising: a pump arrangement (2) for conveying the mass (1) through a discharge opening (5), which is provided in a discharge body (6) and can be closed off by positioning it relative to a first body (4), the discharge body (6) comprising an interior space (7) and the pump arrangement (2) being provided in the interior space (7),
**characterised**
- **in that** the pump arrangement (2) comprises two driven roller-shaped conveying means (17),
- **in that** the two conveying means (17) intermesh and are arranged on two shafts (18) rotating in opposite directions,
- **in that** the conveying means have ridges (27) and recesses (28),
- **and in that** the profile of the ridges (27) and the recesses (28) is V-shaped, or in that the toothing of the ridges (27) and the recesses (28) is helical, straight or wavy.

2. The device according to claim 1, **characterised in that** at least one discharge opening (5) is provided in the discharge body (6), and **in that** for discharging the mass onto the carrier body (15), the first opening (3) and the discharge opening (5) are arranged in the discharge region (16) one above the other or overlapping one another.

3. The device according to claim 1 or 2, **characterised in that** the basic shape of the discharge body (6) is that of a hollow cylinder which at least partially surrounds the interior space (7).

4. The device according to one of claims 1 to 3, **characterised in that** the axis of rotation substantially corresponds to the axis of symmetry of the discharge body (6) and/or the interior space (7).

5. The device according to one of claims 1 to 4, **characterised in that** a plurality of discharge openings (5) are provided in the discharge body (6) along a circumferential circle.

6. The device according to one of claims 1 to 5, **characterised in that** the first body (4) is designed to substantially follow the inside of the interior space (7) of the hollow-cylindrical discharge body (6).

7. The device according to one of claims 1 to 6, **characterised in that** the discharge openings (5) outside the discharge region (16) are closed by the first body (4).

8. The device according to one of claims 1 to 7, **characterised in that** a group of discharge openings (5) is arranged per discharge region (16), the respective discharge openings (5) of a group being movable one after the other into the discharge region (16) by moving the discharge body (6).

9. The device according to claim 8, **characterised in that** the discharge openings (5) of a group are each arranged along a circumferential circle of the discharge body (6).

10. The device according to claim 9, **characterised in that** a plurality of discharge regions (16) are provided, **in that** the circumferential circles extend substantially parallel to one another and **in that** the circumferential circles at least partially pass through one discharge region (16) each.

11. The device according to one of claims 1 to 10, **characterised in that** one pump arrangement (2) is provided per discharge region (16), per group of discharge openings (5) and/or per circumferential circle.

12. The device according to one of claims 1 to 11, **characterised in that** the discharge body (6) has a plurality of groups of discharge openings (5) and a cylindrical interior space (7),
**in that** the discharge openings (5) of a group are arranged along a circumferential circle (26) of the discharge body (6),
**in that** per group of discharge openings (5) a pump arrangement (2) is provided in the interior space (7), which conveys the mass (1) from a mass supply line (10) to the first opening (3),
**in that** the discharge body (6) is rotatably arranged around the pump arrangement (2) and around the first body (4),
**in that** the mass (1) is conveyed into the discharge region (16) when the first opening (3) and the discharge opening (5) at least overlap one another,
and/or **in that** the discharge through the same discharge opening (5) is stopped when it is closed by the first body.

13. The device according to one of claims 1 to 12, **characterised in that** the conveying means (17) are driven by a pump drive (12) via shafts (18).

14. The device according to claim 13, **characterised in that** at least two, preferably all pump arrangements (2) are driven by the same pump drive (12) and/or the same shafts (18).

15. The device according to one of claims 1 to 14, **characterised in that** a discharge drive is provided for rotating the discharge body.

16. The device according to claim 15, **characterised in that** the pump arrangements and the discharge body are driven separately or in a separately controllable manner.

17. The device according to one of claims 1 to 16, **characterised in that** one pump arrangement each is provided for two discharge openings (5) and/or two discharge regions (16).

## Revendications

1. Dispositif pour la distribution dosée d'une masse pompable (1) sur un corps porteur (15) mobile dans une zone de distribution (16), comprenant : un agencement de pompe (2) pour le transport de la masse (1) à travers une orifice de distribution (5) prévue dans un corps de distribution (6) et pouvant être fermée par positionnement par rapport à un premier corps (4), le corps de distribution (6) comprenant un espace intérieur (7) et l'agencement de pompe (2) étant prévu dans l'espace intérieur (7), **caractérisé**
- **en ce que** l'agencement de pompe (2) comprend deux moyens de transport (17) entraînés en forme de rouleaux,
- **en ce que** les deux moyens de transport (17) s'engrènent et sont disposés sur deux arbres (18) tournant en sens inverse,
- **en ce que** les moyens de transport présentent des nervures (27) et des évidements (28),
- **et en ce que** les nervures (27) et les évidements (28) sont en forme de V, ou en ce que les nervures (27) et les évidements (28) ont une denture hélicoïdale, droite ou ondulée.

2. Dispositif selon la revendication 1, **caractérisé en ce qu'**au moins une orifice de distribution (5) est prévue dans le corps de distribution (6), et **en ce que** pour distribuer la masse sur le corps porteur (15), la première orifice (3) et l'orifice de distribution (5) sont disposées dans la zone de distribution (16) l'une au-dessus de l'autre ou en se chevauchant.

3. Dispositif selon la revendication 1 ou 2, **caractérisé en ce que** le corps de distribution (6) a une forme de base essentiellement en forme de cylindre creux qui entoure au moins partiellement l'espace intérieur (7).

4. Dispositif selon l'une des revendications 1 à 3, **caractérisé en ce que** l'axe de rotation correspond essentiellement à l'axe de symétrie du corps de distribution (6) et/ou de l'espace intérieur (7).

5. Dispositif selon l'une des revendications 1 à 4, **caractérisé en ce qu'**une pluralité d'orifices de distribution (5) sont prévues dans le corps de distribution (6) le long d'un cercle périphérique.

6. Dispositif selon l'une des revendications 1 à 5, **caractérisé en ce que** le premier corps (4) est conçu essentiellement pour suivre la face intérieure de l'espace intérieur (7) du corps de distribution (6) en forme de cylindre creux.

7. Dispositif selon l'une des revendications 1 à 6, **caractérisé en ce que** les orifices de distribution (5) à l'extérieur de la zone de distribution (16) sont fermées par le premier corps (4).

8. Dispositif selon l'une des revendications 1 à 7, **caractérisé en ce qu'**un groupe d'orifices de distribution (5) est disposé par zone de distribution (16), les orifices de distribution (5) respectives d'un groupe pouvant être déplacées l'une après l'autre dans la zone de distribution (16) par le mouvement du corps de distribution (6).

9. Dispositif selon la revendication 8, **caractérisé en ce que** les orifices de distribution (5) d'un groupe sont chacune disposées le long d'un cercle périphérique du corps de distribution (6).

10. Dispositif selon la revendication 9, **caractérisé en ce que** plusieurs zones de distribution (16) sont prévues, **en ce que** les cercles périphériques s'étendent sensiblement parallèlement les uns aux autres et **en ce que** les cercles périphériques passent au moins partiellement chacun par une zone de distribution (16).

11. Dispositif selon l'une des revendications 1 à 10, **caractérisé en ce qu'**il est prévu un agencement de pompe (2) par zone de distribution (16), par groupe d'orifices de distribution (5) et/ou par cercle périphérique.

12. Dispositif selon l'une des revendications 1 à 11, **caractérisé en ce que** le corps de distribution (6) comprend plusieurs groupes d'orifices de distribution (5) et un espace intérieur (7) cylindrique,
**en ce que** les orifices de distribution (5) d'un groupe sont disposées le long d'un cercle périphérique (26) du corps de distribution (6),
**en ce que** dans l'espace intérieur (7) il est prévu un agencement de pompe (2) par groupe d'orifices de distribution (5) qui transporte la masse (1) d'une conduite d'alimentation de masse (10) à la première orifice (3),
**en ce que** le corps de distribution (6) est disposé de façon rotative autour de l'agencement de pompe (2) et autour du premier corps (4),
**en ce que** la masse (1) est transportée dans la zone de distribution (16) lorsque la première orifice (3) et l'orifice de distribution (5) se chevauchent au moins,
et/ou **en ce que** le transport à travers la même orifice de distribution (5) est arrêté lorsqu'elle est fermée par le premier corps.

13. Dispositif selon l'une des revendications 1 à 12, **caractérisé en ce que** les moyens de transport (17) sont entraînés par un entraînement de pompe (12) par l'intermédiaire d'arbres (18).

14. Dispositif selon la revendication 13, **caractérisé en ce qu'**au moins deux, de préférence tous les agencements de pompe (2) sont entraînés par le même entraînement de pompe (12) et/ou les mêmes arbres (18).

15. Dispositif selon l'une des revendications 1 à 14, **caractérisé en ce qu'**un entraînement de distribution est prévu pour faire tourner le corps de distribution.

16. Dispositif selon la revendication 15, **caractérisé en ce que** l'entraînement des agencements de pompe et l'entraînement du corps de distribution sont prévus séparément ou peuvent être commandés séparément.

17. Dispositif selon l'une des revendications 1 à 16, **caractérisé en ce qu'**il est prévu un agencement de pompe pour deux ouvertures de distribution (5) et/ou deux zones de distribution (16).
